# FASCICULE DE BREVET EUROPEEN

(11) **EP 2 007 597 B1**
(45) Date de publication et mention de la délivrance du brevet: **10.05.2017**
(21) Numéro de dépôt: 07727580.8
(22) Date de dépôt: 30.03.2007
(51) Int. Cl.: B60C 23/04

(54) **DISPOSITIF DE FIXATION D'UN MODULE SUR LA PAROI INTERNE D'UN PNEUMATIQUE**
VORRICHTUNG ZUM BEFESTIGEN EINES MODULS AN DER INNENWANDUNG EINES REIFENS
DEVICE FOR FIXING A MODULE ON THE INNER WALL OF A TYRE

(30) Priorité: 04.04.2006 FR 0603077
(43) Date de publication de la demande: 31.12.2008
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: DURIF, Pierre, F-63530 Enval (FR); PAUL, Xavier, F-63400 Chamalières (FR)
(74) Mandataire: Le Cam, Stéphane Georges Elie
(86) Numéro de dépôt international: PCT/EP2007/053108
(87) Numéro de publication internationale: WO 2007/113252

(56) Documents cités:
- EP-A1- 1 598 218
- WO-A-99/41093
- WO-A-2005/044600
- WO-A-2005/087517
- WO-A-2006/128540
- DE-U1-202005 005 144

## Description

L'invention est relative à un dispositif de fixation d'un module sur la paroi interne d'un pneumatique et plus spécifiquement à un dispositif de fixation d'un module électronique.

L'utilisation de modules électroniques dans les pneumatiques peut permettre une multitude d'applications consistant à acquérir, stocker et/ou transmettre des informations dans le but de suivre l'utilisation du pneumatique, et notamment de renseigner sur l'évolution des performances du pneumatique durant sa durée de vie.

De tels modules électroniques peuvent comprendre des composants passifs tels des puces d'identification ou RFID, et/ou des composants actifs reliés à un système autonome d'alimentation en énergie électrique tel que des batteries ou encore un système à couplage inductif. Ces modules électroniques peuvent être conçus pour échanger des informations avec des modules externes, servant par exemple d'interface avec l'usager, par l'intermédiaire d'ondes radio dont la fréquence et la puissance sont soigneusement ajustées et selon des protocoles de transmission spécifiques. Ils peuvent encore être prévus pour stocker des informations pour être interrogés ultérieurement, par exemple pour analyser l'usage du pneumatique. Les modules électroniques sont généralement disposés à l'intérieur de boîtiers de protection souple ou rigide, destinés à préserver les composants électroniques des agressions liées aux chocs, et à l'ambiance régnant dans le pneumatique, notamment du fait de la présence de fluide, par exemples à vocations anti-oxydante ou anti-crevaison, et à son environnement.

Un tel module électronique, peut notamment être fixé à l'intérieur de la cavité formée par le pneumatique une fois monté sur la roue ; pour cela il peut être disposé sur un grand nombre de supports. Ainsi il peut être fixé à la valve, fixé sur la jante, fixé ou collé sur la paroi intérieure du pneumatique ou encore être intégré aux composants du pneumatique. Le choix d'une de ces solutions dépend de la nature du pneumatique, des sollicitations qu'il peut endurer, de la nature de la source d'énergie du souhaitée en cas de maintenance. L'invention est relative au cas d'un module électronique fixé sur la paroi interne du pneumatique.

Lorsque le module électronique est ainsi associé au pneumatique, le mode de fixation choisi doit assurer le maintien en position du module quelles que soient la vitesse de rotation et les conditions d'usage de l'enveloppe.

Des solutions de fixation permettant de répondre à ces exigences ont déjà été décrites par exemple dans les publications EP 1 598 218, EP 0 936 089, US 6 255 940, US 6 462 650 ou encore WO 2005044600, qui décrivent des systèmes de fixation d'un module sur la paroi intérieure d'un pneumatique. Ces dispositifs sont composés d'une semelle souple dont une face sert de liaison avec la paroi intérieure du pneumatique et dont l'autre face comporte un moyen de fixation coopérant avec les moyens d'attache disposés sur le module.

Bien que non limitée à ce type d'application, l'invention sera plus particulièrement décrite en référence à des modules électroniques dont la longueur est supérieure ou égale à 12 cm destinés à être insérés dans des pneumatiques pour véhicule de type génie civil présentant une largeur axiale supérieure à 18 pouces et pouvant aller jusqu'à 63 pouces dans le cas de véhicules de type dumper.

Dans le cas de ce type de véhicules, notamment destinés à des usages dans des mines ou carrières pour le transport de charges, les dimensions des pneumatiques associées aux charges qu'ils supportent en roulage conduisent à des flèches des pneumatiques de l'ordre de 20 à 30 % en fonction de la dimension du pneumatique; Ils peuvent notamment subir des augmentations de charge supérieur à 50% du fait de surcharges dynamiques liées par exemple à des freinages pour des véhicules de type chargeuse ou bien par exemple à des déformations des pistes de circulation dans le cas des véhicules de type dumper.

La flèche d'un pneumatique est définie par la déformation radiale du pneumatique, ou variation de la hauteur radiale, lorsque celui-ci passe d'un état non chargé à un état chargé en statique, dans des conditions de charge et de pression nominales.

Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé à la pression nominale.

Le pneumatique subit ainsi dans cette zone des contraintes radiales. Celles-ci sont combinées à des contraintes longitudinales du fait notamment de la déradialisation du pneumatique dans la zone de l'aire de contact. La combinaison de ces contraintes se traduit notamment par des déformations des parois du pneumatique.

Ces déformations combinées à la présence de modules électroniques tels que ceux précités, dont la longueur est relativement importante, nécessitent des moyens de fixation plus adaptés pour garantir la pérennité de la fixation. En outre, il est usuel de mettre en place ces modules dans ces zones du pneumatique pour éviter la zone du sommet afin de limiter au maximum les disfonctionnements, ou interférences, du fait de la présence des éléments de renforcement métalliques de l'armature de sommet ; seuls les éléments de renforcement métalliques de l'armature de carcasse peuvent interférer au bon fonctionnement desdits modules fixés dans ces zones.

Les inventeurs se sont ainsi donnés pour mission de définir un dispositif de fixation d'un module électronique permettant de garantir la pérennité de ladite fixation y compris dans le cas d'un module tel que celui décrit précédemment et présentant une longueur au moins égale à 12 cm, celui-ci étant fixé dans un pneumatique pouvant supporter des flèches de l'ordre de 30 % et mis en place de façon à limiter au mieux les interférences dues à la présence des renforts métalliques.

Ce but a été atteint selon l'invention par un dispositif de fixation d'un module sur la paroi interne d'un pneumatique, ledit dispositif étant constitué d'une embase solidaire du pneumatique, l'embase comportant au moins deux bretelles indépendantes et solidaires de l'embase et des moyens de blocage du module, les bretelles étant orientées radialement.

Au sens de l'invention, l'orientation radiale des bretelles signifie que la direction principale de la bretelle est radiale et donc parallèle aux éléments de renforcement de l'armature de carcasse.

Avantageusement pour limiter au mieux les interférences du fait des éléments de renforcement de l'armature de sommet, l'embase est située dans le flanc du pneumatique et de préférence encore dans la partie inférieure du flanc

Conformément à l'invention, l'embase fixée sur la paroi interne du pneumatique est associée à deux bretelles, chacune assurant une part de la fixation et du blocage du module. Cette répartition des efforts de fixation et de blocage entre au moins deux moyens indépendants est particulièrement intéressante dans le cas d'un module présentant une longueur relativement importante. En effet, la fixation de tels modules est fortement sollicitée lorsque lesdits modules sont fixés dans des parties du pneumatique, telles que les flancs, soumises à des sollicitations importantes et fréquentes du fait des déformations du pneumatique en cours de roulage ; l'utilisation de deux moyens de fixation indépendants et donc séparés l'un de l'autre permet de tenir le module en limitant les contraintes qui s'exercent sur lui lorsque les moyens de fixation sont eux-mêmes sollicités du fait des déformations. Au contraire, la présence d'un moyen unique nécessairement de dimensions plus importantes pour assurer la même retenue conduit à un risque d'endommagement du module beaucoup plus important, les sollicitations qui s'exercent sur lui étant plus localisées.

Selon un mode de réalisation de l'invention particulièrement avantageux, un moyen de fixation est constitué d'une bretelle solidaire de l'embase. Cette bretelle solidaire de l'embase est de préférence réalisée simultanément à la réalisation de l'embase. Elle peut être obtenue par deux ouvertures réalisées dans l'épaisseur de l'embase ; ces ouvertures forment ainsi la bretelle semblable à un passant permettant le passage du module. Ce mode de réalisation est particulièrement avantageux de par sa simplicité de réalisation et de par son utilisation. Les ouvertures dans l'embase peuvent par exemple être réalisées au moment de la fabrication de ladite embase. Lorsque celle-ci est réalisée en un matériau polymérique tel que du caoutchouc, au moment de sa réticulation, ou vulcanisation, on prévoit un insert sur lequel le caoutchouc n'adhère pas, qui est ensuite retiré pour laisser apparaître deux ouvertures formant un passant.

Une variante de réalisation de l'invention prévoit que le module comporte au moins un moyen complémentaire de fixation et/ou de blocage dudit module.

Selon un premier mode de réalisation de cette variante de l'invention, le moyen complémentaire de fixation et/ou de blocage du module est un appendice qui vient en complément d'une ouverture prévue dans l'épaisseur de la bretelle, ledit appendice venant s'insérer dans cette ouverture lorsque le module est glissé sous la bretelle.

Un tel complément de fixation peut en outre permettre de centrer le module par rapport à une position préalablement définie et également contribuer au blocage du module en prévenant notamment les risques de glissement du module.

Selon un deuxième mode de réalisation de cette variante de l'invention, le moyen complémentaire de fixation et/ou de blocage du module est une forme en relief prévue sur la surface du module de type encoche sur laquelle la bretelle vient en butée lorsque le module est mis en place sous ladite bretelle. Une fois le module mis en place, la forme en relief prévue sur le module interdit un déplacement du module par glissement ladite forme en relief butant sur la bretelle. Une telle réalisation permet notamment de limiter la déformation et d'éviter le détachement du module lors de fortes déformations du pneumatique.

Selon une réalisation préférée de l'invention, le blocage du module est obtenu par des efforts exercés par les moyens de fixation.

Selon un premier mode de réalisation, les efforts exercés par les moyens de fixation sont des efforts de rappel élastiques. Selon cette réalisation, le blocage du module est obtenu dès que l'accrochage dudit module est réalisé.

Selon un deuxième mode de réalisation, les efforts exercés par les moyens de fixation sont obtenus par thermorétractation desdits moyens de fixation. Pour cela, les moyens de fixation sont avantageusement réalisés dans un matériau adapté et sont chauffés dès que l'accrochage du module est effectué.

Une variante préférée de réalisation de l'invention prévoit encore que l'embase est réalisée en un matériau polymérique réticulé sur le pneumatique. Avantageusement encore, la réticulation de l'embase est obtenue simultanément à la réticulation, notamment vulcanisation, du pneumatique. Selon cette variante de réalisation de l'invention, la fabrication du pneumatique comportant une embase est réalisée plus rapidement et la fixation de l'embase est parfaitement solidaire de la paroi interne du pneumatique.

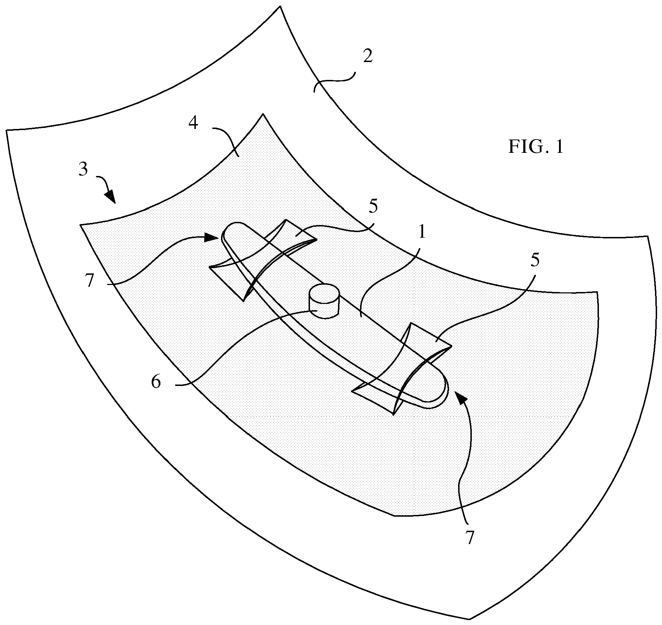

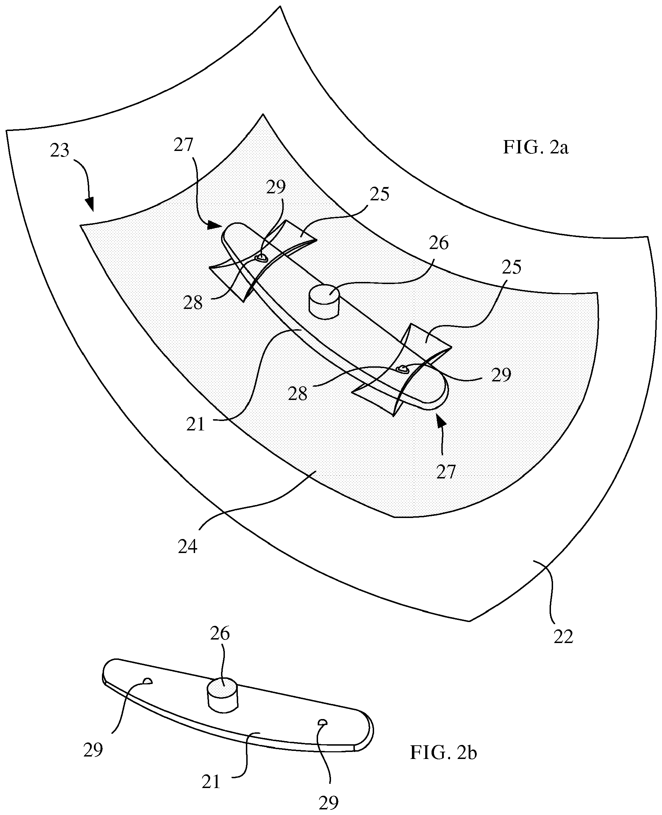

D'autres détails et caractéristiques avantageux de l'invention ressortiront ci-après de la description d'exemples de réalisation de l'invention en référence aux figures 1 et 2 qui représentent :
- figure 1, une représentation schématique selon un premier mode de réalisation d'un dispositif selon l'invention,
- figures 2a, 2b, une représentation schématique selon un deuxième mode de réalisation d'un dispositif selon l'invention.

Les figures ne sont pas représentées à l'échelle pour en simplifier la compréhension.

La Figure 1 représente un module électronique 1 fixé sur la paroi interne 2 d'un pneumatique à l'aide d'un dispositif de fixation 3. Le dispositif de fixation 3 est lui-même composé d'une embase 4 solidaire du pneumatique prévue avec deux bretelles 5 sous lesquelles est inséré le module électronique 1.

L'embase 4 peut par exemple être réalisée lors de la confection du pneumatique, une ou plusieurs couches de caoutchouc la constituant étant mises en place puis cuites simultanément à la cuisson du pneumatique. La formation des deux bretelles 5 peut être obtenue par la présence d'éléments mis en place lors de la cuisson. De tels éléments sont réalisés en tout matériau connu de l'homme du métier sur lequel le caoutchouc n'adhère pas et qui sont insérés entre deux couches de caoutchouc et dont les extrémités sont positionnées pour obtenir la formation recherchée des deux bretelles.

Selon un autre mode de réalisation, l'embase 4 peut être réalisée en caoutchouc par moulage au préalable et rapportée dans le pneumatique avant la cuisson de celui-ci. L'embase 4 est alors déjà cuite et la liaison est obtenue par interposition d'une interface entre l'embase 4 et le pneumatique qui va permettre d'obtenir une liaison entre embase et pneumatique lors de la cuisson de celui-ci.

Selon un dernier mode de réalisation, l'embase 4 peut être réalisée en caoutchouc par moulage au préalable en ne subissant qu'une cuisson partielle permettant de conserver la base, c'est-à-dire la partie de l'embase destinée à venir au contact du pneumatique, non réticulée. L'embase ainsi obtenue est mise en place sur le pneumatique avant la cuisson de celui-ci et la liaison entre embase et pneumatique est ainsi obtenue lors de la cuisson du pneumatique. Selon ce mode de réalisation, il est toutefois prudent de limiter les temps de conservation des embases préfabriquées et partiellement réticulées.

L'embase 4 est avantageusement réalisée en caoutchouc non renforcé pour mieux supporter toutes les déformations du pneumatique. Si la présence d'éléments de renforcement est toutefois requise, ceux-ci sont avantageusement des éléments de renforcement élastiques.

Les bretelles 5 sont également en caoutchouc non renforcé pour mieux supporter toutes les déformations du pneumatique.

Le module électronique 1 comporte une tête de mesure 6, par exemple de mesure de pression, à son sommet. Pour garantir des mesures non perturbées, il est préférable que la tête de mesure 6 ne soit pas recouverte par les bretelles 5. Les deux bretelles étant indépendantes l'une de l'autre, il est aisément possible de fixer le module sans recouvrir la tête de mesure 6 du module électronique 1. Il est par ailleurs avantageux que les deux bretelles soient relativement éloignées l'une de l'autre et proche des extrémités 7 du module 1 pour garantir l'accrochage du module quelles que soient les déformations subies par le pneumatique.

Les bretelles 5 réalisées en caoutchouc non renforcé présentent avantageusement des propriétés élastiques qui sont suffisantes pour bloquer le module électronique 1. Les essais de roulage ont effectivement montré que, le pneumatique étant soumis à des sollicitations importantes du fait de déformations lors de passage sur des sols caillouteux, le module électronique reste en place et que le dispositif de fixation n'a pas été endommagé.

La figure 2a illustre une variante de réalisation selon laquelle les deux bretelles 25 comportent deux ouvertures 28, par exemple circulaires, sensiblement en leur milieu respectif.

Ces ouvertures 28 sont complémentaires de deux appendices ou ergots 29, représentés sur les figures 2a et 2b, prévus sur le module électronique 21. Lorsque celui-ci est glissé sous les bretelles pour y être maintenu, les deux appendices 29 viennent se glisser au sein des ouvertures 28 des bretelles 25. Une telle variante de réalisation peut présenter différents avantages D'une part, la présence de ces ouvertures 28 et appendices 29 permet de mettre en place le module électronique 21 selon une position parfaitement définie. D'autre part, cette combinaison des ouvertures 28 et appendices 29 contribue au blocage du module électronique 21 notamment en évitant tout risque de glissement.

D'autres variantes de réalisation de l'invention, non représentées sur les figures, prévoient encore un collage des bretelles sur le module électronique. Lorsque le module est glissé sous les bretelles, il est prévu simultanément de coller la face intérieure des bretelles sur les parties recouvertes du module; pour cela de la colle est déposée sur l'un des éléments à coller, bretelle ou module, juste avant l'étape de mise en place du module sous les bretelles. Un tel collage peut notamment participer au blocage du module.

Le collage des bretelles sur le module peut encore permettre de rendre le système inviolable. En effet, certaines utilisations de tels modules électroniques prévoient de récupérer les informations mesurées par le module lors d'un changement de pneumatique. Une telle opération peut par exemple permettre de retracer au moins partiellement une partie de l'utilisation du pneumatique ou tout au moins l'évolution de certains paramètres. Il peut alors effectivement être souhaitable de rendre impossible ou tout au moins détectable toute intervention sur ledit module électronique de mesure. Dans le cas du collage, une tentative de changement ou le changement du module électronique sera rendue visible par des traces d'arrachement soit sur le module soit sur l'une et/ou l'autre des bretelles.

Cette variante de réalisation de l'invention dans laquelle intervient un collage peut être combinée avec l'un ou l'autre des modes de réalisation de l'invention décrits aux figures 1 et 2.

Des essais ont été réalisés avec des pneumatiques de dimensions 18.00R33 et 33.00R51 dans lesquels ont été fixés des modules de type capteur de pression dont les dimensions extérieures sont 17 cm de longueur, 3,5cm de largeur et 0,9 cm d'épaisseur.

Ces modules ont été fixés avec un dispositif tel que décrit sur la figure 1, l'embase étant fixée sur la paroi interne du pneumatique au cours de la fabrication de celui-ci. L'embase étant en caoutchouc, elle a été vulcanisée simultanément au pneumatique. Le module est ensuite fixé par insertion sous les deux bretelles.

Des roulages ont été effectués de façon à simuler une utilisation sur des véhicules circulant dans des mines.

Les résultats obtenus ont permis de valider l'efficacité du dispositif de fixation selon l'invention, notamment en terme de tenue dans le temps lors de roulages.

## Revendications

1. Dispositif de fixation (3, 23) d'un module (1, 21) sur la paroi interne (2) d'un pneumatique, comprenant une embase (4, 24) solidaire du pneumatique, **caractérisé en ce que** l'embase (4) comporte au moins deux bretelles (5, 25) indépendantes et solidaires de l'embase, **en ce que** les bretelles (5, 25) sont orientées radialement et **en ce que** chaque bretelle (5, 25) est obtenue par deux ouvertures réalisées dans l'épaisseur de l'embase (4, 24).

2. Dispositif de fixation selon la revendication 1, **caractérisé en ce qu**'au moins une bretelle (25) comporte un moyen complémentaire (28) de fixation du module (21).

3. Dispositif de fixation selon la revendication 2, **caractérisé en ce que** le moyen complémentaire (28) de fixation du module (21) est une ouverture prévue dans l'épaisseur de la bretelle (25).

4. Dispositif de fixation selon l'une des revendications précédentes, **caractérisé en ce que** le blocage du module (1, 21) est obtenu par des efforts exercés par les moyens de fixation (5, 25).

5. Dispositif de fixation selon la revendication 4, **caractérisé en ce que** les efforts exercés par les moyens de fixation (5, 25) sont des efforts de rappel élastiques.

6. Dispositif de fixation selon la revendication 4, **caractérisé en ce que** les efforts exercés par les moyens de fixation (5, 25) sont obtenus par thermorétractation desdits moyens de fixation.

7. Dispositif de fixation selon l'une des revendications précédentes, **caractérisé en ce que** l'embase (4) est réalisée en un matériau polymérique réticulé sur le pneumatique.

## Patentansprüche

1. Vorrichtung zur Befestigung (3, 23) eines Moduls (1, 21) an der Innenwandung (2) eines Reifens, die eine fest mit dem Reifen verbundene Basis (4, 24) umfasst, **dadurch gekennzeichnet, dass** die Basis (4) mindestens zwei eigenständige und mit der Basis fest verbundene Riemen (5, 25) umfasst, dass die Riemen (5, 25) radial ausgerichtet sind und dass jeder Riemen (5, 25) durch zwei in der Dicke der Basis (4, 24) ausgebildete Öffnungen erhalten werden.

2. Befestigungsvorrichtung nach Anspruch 1, **dadurch gekennzeichnet, dass** mindestens ein Riemen (25) ein komplementäres Mittel (28) zur Befestigung des Moduls (21) umfasst.

3. Befestigungsvorrichtung nach Anspruch 2, **dadurch gekennzeichnet, dass** das komplementäre Mittel (28) zur Befestigung des Moduls (21) eine in der Dicke des Riemens (25) vorgesehene Öffnung ist.

4. Befestigungsvorrichtung nach einem der vorhergehenden Ansprüche, **dadurch gekennzeichnet, dass** die Sicherung des Moduls (1, 21) durch Kräfte erzielt wird, die durch die Befestigungsmittel (5, 25) ausgeübt werden.

5. Befestigungsvorrichtung nach Anspruch 4, **dadurch gekennzeichnet, dass** die durch die Befestigungsmittel (5, 25) ausgeübten Kräfte elastische Rückstellkräfte sind.

6. Befestigungsvorrichtung nach Anspruch 4, **dadurch gekennzeichnet, dass** die durch die Befestigungsmittel (5, 25) ausgeübten Kräfte durch Wärmeschrumpfung der Befestigungsmittel erhalten werden.

7. Befestigungsvorrichtung nach einem der vorhergehenden Ansprüche, **dadurch gekennzeichnet, dass** die Basis (4) aus einem an dem Reifen vernetzten Polymermaterial ausgebildet ist.

## Claims

1. Device (3, 23) for fixing a module (1, 21) to the internal wall (2) of a tyre, comprising a support (4, 24) secured to the tyre, **characterized in that** the support (4) has at least two independent straps (5, 25) secured to the support, **in that** the straps (5, 25) are oriented radially **and in that** each strap (5, 25) is obtained by two openings made in the thickness of the support (4, 24).

2. Fixing device according to Claim 1, **characterized in that** at least one strap (25) includes a complementary means (28) for fixing the module (21).

3. Fixing device according to Claim 2, **characterized in that** the complementary means (28) for fixing the module (21) is an opening provided in the thickness of the strap (25).

4. Fixing device according to one of the preceding claims, **characterized in that** the module (1, 21) is immobilized by forces exerted by the fixing means (5, 25).

5. Fixing device according to Claim 4, **characterized in that** the forces exerted by the fixing means (5, 25) are elastic restoring forces.

6. Fixing device according to Claim 4, **characterized in that** the forces exerted by the fixing means (5, 25) are obtained by the thermal contraction of said fixing means.

7. Fixing device according to one of the preceding claims, **characterized in that** the support (4) is made of a polymeric material crosslinked on the tyre.
